# EUROPÄISCHE PATENTSCHRIFT

(11) **EP 1 647 320 B1**
(45) Veröffentlichungstag und Bekanntmachung des Hinweises auf die Patenterteilung: **18.07.2007**
(21) Anmeldenummer: 04024586.2
(22) Anmeldetag: 15.10.2004
(51) Int. Cl.: B01D 46/52, B01D 46/24, B60K 15/04, F01M 13/04

(54) **Tankbelüftungsfilter**
Breathing filter for a tank
Filtre de dégazage pour un réservoir

(43) Veröffentlichungstag der Anmeldung: 19.04.2006
(73) Patentinhaber: ARGO-HYTOS GmbH, 76703 Kraichtal (DE)
(72) Erfinder: Mössinger, Klaus, 74182 Obersulm (DE)
(74) Vertreter: Hoeger, Stellrecht & Partner Patentanwälte

(56) Entgegenhaltungen:
- EP-A- 0 278 080
- DE-B- 1 047 171
- US-A- 3 546 853
- US-A- 3 622 033
- US-A- 4 740 296

## Beschreibung

Die Erfindung betrifft ein Tankbelüftungsfilter mit einem Gehäuse, das eine mit dem zu belüftenden Tank verbindbare Tanköffnung und eine mit der Umgebung verbundene Durchlaßöffnung aufweist, wobei zwischen der Tank- und der Durchlaßöffnung ein Filterelement angeordnet ist.

Derartige Tankbelüftungsfilter kommen in Hydrauliksystemen zum Einsatz, bei denen Hydrauliköl bedarfsweise aus dem Vorratstank entnommen bzw. diesem zugeführt wird. Durch Befüllung bzw. Entleerung von Hydraulikzylindern und Druckspeichern des Hydrauliksystems werden im Vorratstank Schwankungen des Ölniveaus hervorgerufen, aufgrund derer es erforderlich ist, über das Tankbelüftungsfilter einen Luftaustausch zwischen dem Innenraum des Vorratstanks und der Außenatmosphäre zu ermöglichen. Zur Filtrierung der einströmenden bzw. aus dem Vorratstank ausströmenden Luft kommt ein Filterelement zum Einsatz, das aus einem flachen Filtermaterial gefertigt ist. Das Filtermaterial wird hierzu in vielen Fällen sternförmig gefaltet, wobei die seitlichen Endkanten des gefalteten Filtermaterials miteinander verklebt werden. Anschließend wird der so gebildete Filterbalg stirnseitig mit Endscheiben verklebt und dann in ein Gehäuse des Tankbelüftungsfilters eingesetzt. Derartige Tankbelüftungsfilter sind aus der US-A-3,546,853 bekannt. Die Fertigung des Filterelements ist ebenso wie die Montage des Tankbelüftungsfilters mit nicht unerheblichen Herstellungskosten verbunden.

Ein Tankbelüftungsfilter mit den Merkmalen des Oberbegriffes von Anspruch 1 ist aus der US-A-3,546,853 bekannt. Das Filterelement ist sternförmig gefaltet und in axialer Richtung zwischen Gehäuseelementen eingespannt.

Aus der DE 1 047 171 B ist ein Filter für Vergaser-Brennkraftmaschinen mit einem Filterelement bekannt, das aus Papier gefertigt ist und einen nahezu vollständigen Becher bildet mit einer Bodenwand und einer gewellten, schräg zur Bodenwand ausgerichteten Seitenwand, die die Bodenwand in Umfangsrichtung umgibt.

Aus der US-A-4,740,296 ist ein tragbares Wasserfilter für den Haushalt bekannt, bei dem mehrere Filterelemente ineinander gesetzt sind. Die Filterelemente sind jeweils einstückig ausgestaltet und weisen eine Stirnwand auf, die von einer gewellten, schräg zur Stirnwand ausgerichteten Seitenwand umgeben ist.

Ein derartiges Filterelement wird auch in der EP-A-0 278 080 beschrieben.

Aufgabe der vorliegenden Erfindung ist es, ein Tankbelüftungsfilter der eingangs genannten Art kostengünstig herstellbar auszugestalten.

Diese Aufgabe wird erfindungsgemäß durch ein Tankbelüftungsfilter mit den Merkmalen von Patentanspruch 1 gelöst.

Das Filterelement des Tankbelüftungsfilters läßt sich auf kostengünstige Weise herstellen, indem ein Zuschnitt des flachen Filtermaterials bereit gestellt wird, von dem ein ringförmiger Außenbereich, der einen zentralen Innenbereich des Zuschnittes in Umfangsrichtung umgibt, unter Ausbildung einer gewellten Seitenwand aus der Ebene des Innenbereiches nach einer Seite herausgeklappt wird. Die Herstellung des Filterelements erfolgt somit durch Umformung des flachen Filtermaterials, ohne daß Seitenkanten des Filtermaterials miteinander verklebt oder auf andere Weise aneinander festgelegt werden müssen. Das wannen- oder backformartig ausgestaltete Filterelement kann anschließend in das Gehäuse des Tankbelüftungsfilters eingesetzt und in diesem festgelegt werden. Es hat sich gezeigt, daß dadurch die Herstellungskosten des Filterelementes reduziert werden können.

Erfindungsgemäß ist das Filterelement im Gehäuse verklemmt. Eine Festlegung des Filterelementes mittels einer Klebeschicht kann dadurch entfallen.

Und zwar ist vorgesehen, daß das Filterelement zwischen miteinander zusammenwirkenden Klemmelementen des Gehäuseoberteils und des Gehäuseunterteils eingeklemmt ist. Beim Zusammenfügen von Gehäuseoberteil und Gehäuseunterteil wirken die beiden Klemmelemente derart zusammen, daß das Filterelement zwischen ihnen unverschieblich gehalten ist.

Die Klemmelemente verklemmen einen Bereich der Seitenwand des Filterelements in radialer Richtung. Dies hat zur Folge, daß das Filterelement beim Zusammenfügen der beiden Gehäuseteile keiner axialen Belastung unterliegt, d.h. keiner Belastung senkrecht zur Stirnwand.

Die Klemmelemente sind geriffelt entsprechend der wellenförmigen Ausgestaltung der Seitenwand des Filterelementes. Dadurch ist sichergestellt, daß der zwischen den Klemmelementen angeordnete Bereich der gewellten Seitenwand flächig an den Klemmelementen anliegt. Folglich kann eine das Filterelement möglicherweise beeinträchtigende punkt- oder linienförmige Beaufschlagung durch die Klemmelemente vermieden werden.

Günstig ist es, wenn die Stirnwand des Filterelementes kreisförmig und die von dieser seitlich abstehende Seitenwand in Form des Mantels eines Kegelstumpfes ausgestaltet ist. Das Filterelement erhält dadurch eine hohe mechanische Stabilität und eignet sich insbesondere für rotationssymmetrisch ausgebildete Tankbelüftungsfilter.

Als Flachmaterial kommt insbesondere ein Filterpapier zum Einsatz, das zur Herstellung des Filterelementes zugeschnitten und anschließend umgeformt wird.

Die Herstellung des Filterelements kann in der Weise erfolgen, daß man aus einem Filtermaterial einen Zuschnitt bildet und einen ringförmigen Außenbereich des Zuschnittes, der einen zentralen Innenbereich des Zuschnittes in Umfangsrichtung umgibt, unter Ausbildung einer gewellten Seitenwand aus der Ebene des Innenbereiches nach einer Seite herausklappt. Wie bereits erläutert, kann dadurch auf kostengünstige Weise ein Filterelement hergestellt werden.

Von Vorteil ist es, wenn man einen Zuschnitt bildet mit einem kreisförmigen Innenbereich und einem kreisringförmigen Außenbereich, den man unter Ausbildung einer gewellten Seitenwand aus der Ebene des Innenbereiches herausklappt.

Das Gehäuse des Tankbelüftungsfilters weist ein mit dem zu belüftenden Tank verbindbares Gehäuseunterteil und ein Gehäuseoberteil auf, wobei die Stirnwand des Filterelementes am Gehäuseoberteil und die Seitenwand des Filterelementes am Gehäuseunterteil anliegt. Die beiden Gehäuseteile können beispielsweise miteinander verschraubt oder verrastet werden, wobei vor dem Zusammenfügen der beiden Gehäuseteile das Filterelement in das Gehäuseoberteil oder das Gehäuseunterteil eingesetzt und anschließend durch Zusammenfügen der beiden Gehäuseteile festgelegt wird.

Eine besonders hohe mechanische Belastbarkeit wird bei einer vorteilhaften Ausführungsform des Tankbelüftungsfilters dadurch erzielt, daß die Stirnwand des Filterelementes von einer Stütze des Gehäuseunterteils abgestützt ist. Die Stirnwand des Filterelementes kann dadurch zwischen der Stütze und dem Gehäuseoberteil positioniert werden.

Die Klemmelemente nehmen bei einer besonders bevorzugten Ausführungsform des erfindungsgemäßen Tankbelüftungsfilters einen äußeren Randbereich der Seitenwand des Filterelementes zwischen sich auf. Das Filterelement wird somit in dem der Stirnwand abgewandten Endbereich verklemmt.

Von Vorteil ist es, wenn die Klemmelemente ringförmig ausgestaltet sind, denn dadurch kann ein ringförmiger Bereich der Seitenwand des Filterelementes gleichförmig mit einer Klemmkraft beaufschlagt werden, durch die das Filterelement innerhalb des Gehäuses eine hohe mechanische Belastbarkeit erfährt.

Vorzugsweise ist ein erstes Klemmelement einstückig mit dem Gehäuseunterteil verbunden. Dies ermöglicht eine kostengünstige Herstellung des Gehäuseunterteiles einschließlich des Klemmelementes. Es kann vorgesehen sein, daß das Gehäuseunterteil und das erste Klemmelement aus einem Kunststoffmaterial, insbesondere aus einem Polyamid, beispielsweise einem glasfaserverstärkten Polyamid, gefertigt sind.

Das zweite Klemmelement kann mit dem Gehäuseoberteil einstückig verbunden sein. Alternativ kann vorgesehen sein, daß das zweite Klemmelement als separates Bauteil ausgestaltet ist, das am Gehäuseoberteil festgelegt ist, vorzugsweise ist es mit dem Gehäuseoberteil verrastet.

Auch das zweite Klemmelement und das Gehäuseoberteil können aus einem Kunststoffmaterial gefertigt sein, beispielsweise aus Polyamid, insbesondere aus glasfaserverstärktem Polyamid.

Von besonderem Vorteil ist es, wenn das zweite Klemmelement einen Klemmring ausbildet, der über Stege mit dem Gehäuseoberteil verbunden ist. Die Stege können zwischen sich einen Freiraum ausbilden, durch den die Luft hindurchströmen kann, die mittels des Filterelementes gefiltert werden soll. Die Stege können bezogen auf den Umfang des Klemmrings in gleichmäßigem Abstand zueinander angeordnet sein, wobei sie an ihrem dem Klemmring abgewandten Endbereich Rastelemente zur Verrastung mit dem Gehäuseoberteil aufweisen.

Die nachfolgende Beschreibung einer bevorzugten Ausführungsform der Erfindung dient im Zusammenhang mit der Zeichnung der näheren Erläuterung. Es zeigen:
- Figur 1:: eine Längsschnittansicht eines Tankbelüftungsfilters;
- Figur 2:: eine Schnittansicht längs der Linie 2-2 in Figur 1 und

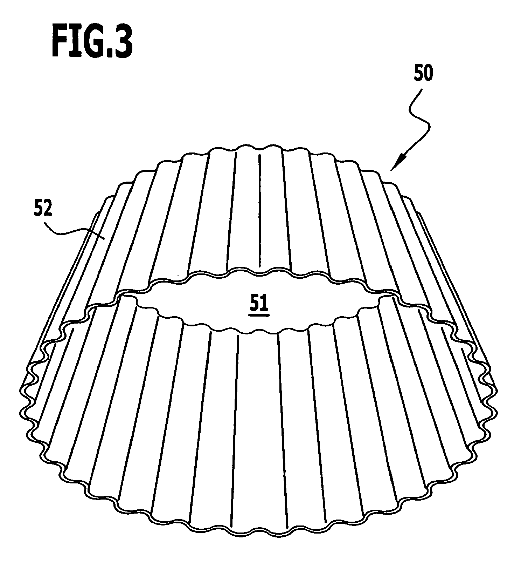

- Figur 3:: eine schaubildliche Darstellung eines beim Tankbelüftungsfilter zum Einsatz kommenden Filterelementes.

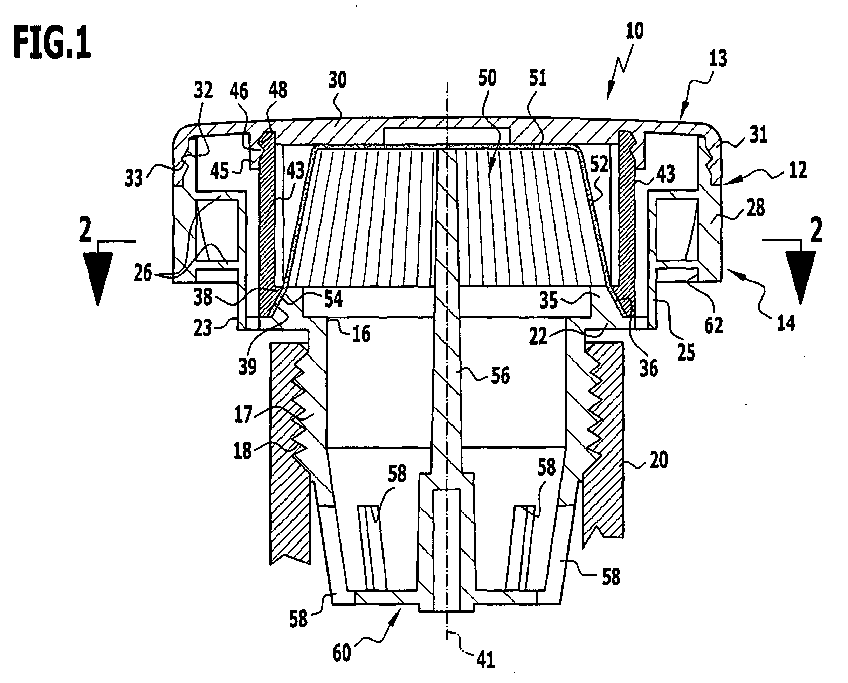

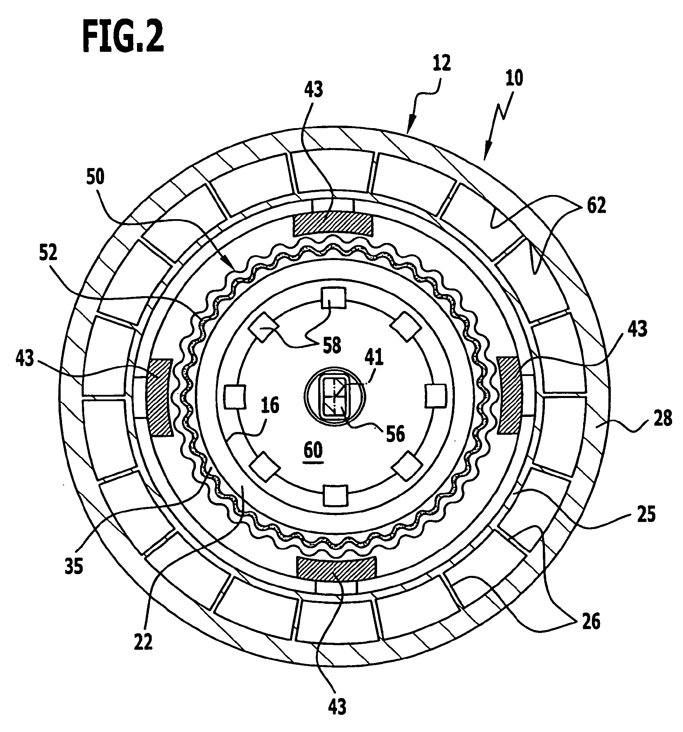

In den Figuren 1 und 2 ist ein insgesamt mit dem Bezugszeichen 10 belegtes erfindungsgemäßes Tankbelüftungsfilter dargestellt, das zur Belüftung eines Vorratstanks von Hydrauliköl eines Hydrauliksystems zum Einsatz kommt. Es umfaßt ein zweiteiliges, aus glasfaserverstärktem Polyamid gefertigtes Gehäuse 12 mit einem Gehäuseoberteil, das einen Deckel 13 ausbildet, und mit einem ungefähr wannenförmig gestalteten Gehäuseunterteil 14, das eine zentrale Tanköffnung 16 aufweist, an die sich einstückig in die dem Deckel 13 abgewandte Richtung ein Rohrstutzen 17 mit einem Außengewinde 18 anschließt, mit dessen Hilfe das Tankbelüftungsfilter 10 in einen Anschlußstutzen 20 eines Vorratstanks für Hydrauliköl eingeschraubt werden kann.

Die Tanköffnung 16 ist in eine Bodenwand 22 des Gehäuseunterteils 14 eingeformt. Die Bodenwand 22 trägt an ihrem Außenumfang 23 eine hohlzylinderförmige und kolinear zur kreisförmigen Tanköffnung 16 in Richtung des Deckels 13 ausgerichtete Zwischenwand 25, die über eine Vielzahl von radial verlaufenden Verbindungsstegen 26 mit einer kolinear zur Zwischenwand 25 ausgerichteten hohlzylinderförmigen Außenwand 28 einstückig verbunden ist.

Der Deckel 13 weist eine Deckenwand 30 auf, von der ein Mantel 31 in Richtung des Gehäuseunterteils 14 absteht. Der Mantel 31 weist innenseitig Rastaufnahmen 32 auf, in die am oberen Ende der Außenwand 28 angeformte Rastvorsprünge 33 eintauchen, so daß der Deckel 13 mittels der Rastaufnahmen 32 und der Rastvorsprünge 33 mit dem Gehäuseunterteil 14 verrastet ist.

An die Bodenwand 22 ist auf deren dem Deckel 13 zugewandten Oberseite ein erster Klemmring 35 angeformt, der sich in Richtung des Deckels 13 konisch verjüngt und außenseitig eine geriffelte erste Klemmfläche 36 ausbildet. Der erste Klemmring 35 wirkt mit einem zweiten Klemmring 38 zusammen, der eine der ersten Klemmfläche 36 zugewandte, ebenfalls geriffelte zweite Klemmfläche 39 aufweist und über vier an den zweiten Klemmring 38 angeformte, parallel zur Mittelachse 41 des Tankbelüftungsfilters 10 verlaufende Haltestege 43 mit dem Deckel 13 verrastet ist. Der Deckel 13 weist hierzu an der dem Gehäuseunterteil 14 zugewandten Unterseite der Deckenwand 30 einen in Richtung des Gehäuseunterteiles 14 vorstehenden ringförmigen Kragen 45 auf, der innenseitig Rastelemente 46 trägt, die mit an den freien Enden der Haltestege 43 angeordneten Rastelementen 48 zusammenwirken. Der zweite Klemmring 38 kann somit mittels der Haltestege 43 auf einfache Weise mit dem Deckel 13 verrastet werden.

Das Gehäuse 12 nimmt ein aus einem Filterpapier geformtes Filterelement 50 auf, das eine ebene Stirnwand 51 aufweist, die in Umfangsrichtung von einer einstückig mit der Stirnwand verbundenen gewellten Seitenwand 52 umgeben ist, die zur Ebene der Stirnwand 51 geneigt und in Richtung des Gehäuseunterteiles 14 ausgerichtet ist. Die Stirnwand 51 liegt an der Unterseite der Deckenwand 30 des Deckels 13 an, und die Seitenwand 52 ist mit einem äußeren Randbereich 54 zwischen der ersten Klemmfläche 36 des ersten Klemmrings 35 und der zweiten Klemmfläche 39 des zweiten Klemmrings 38 verklemmt. In ihrem mittigen Bereich wird die Stirnwand 51 auf ihrer dem Gehäuseunterteil 14 zugewandten Unterseite von einer Stütze 56 abgestützt, die einstückig mit einer mehrere Durchbrechungen 58 aufweisenden Endkappe 60 des Rohrstutzens 17 verbunden ist. Das Filterelement 50 ist somit innerhalb des Gehäuses 12 unverschieblich gehalten, wobei es in radialer Richtung mittels der beiden Klemmringe 35 und 38 verklemmt ist und sich in axialer Richtung einerseits an der Stütze 56 und andererseits an der Deckenwand 30 abstützt.

Das Gehäuseunterteil 14 weist im Bereich zwischen der Zwischenwand 25 und der Außenwand 28 eine Vielzahl von Durchlaßöffnungen 62 auf, über die Umgebungsluft in das Innere des Gehäuses 12 gelangen kann, wobei sie den nicht von den beiden Klemmringen 35, 38 überdeckten Bereich der Seitenwand 52 des Filterelementes 50 durchströmen und anschließend über die Tanköffnung 16 in den Hydrauliktank gelangen kann. In umgekehrter Richtung kann aus dem Hydrauliktank Luft über die Tanköffnung 16 zur Seitenwand 52 des Filterelementes gelangen, dieses durchströmen und anschließend über die Durchlaßöffnungen 62 aus dem Tankbelüftungsfilter 10 entweichen.

Zur Herstellung des Filterelementes 50 ist es lediglich erforderlich, einen kreisförmigen Zuschnitt eines Filterpapieres herzustellen und anschließend einen kreisringförmigen Bereich des Zuschnittes, der einen zentralen Innenbereich des Zuschnitts in Umfangsrichtung umgibt, aus der Ebene des Innenbereiches herauszuklappen unter Ausbildung der gewellten Seitenwand 52, während der zentrale Innenbereich die ebene Stirnwand 51 ausbildet. Das so geformte Filterelement 50 kann anschließend mit dem äußeren Randbereich 54 der Seitenwand 52 auf die zweite Klemmfläche 39 des Gehäuseunterteiles 14 aufgesetzt werden, wobei die Stirnwand 51 von der Stütze 56 abgestützt wird. Anschlie-ßend kann der Deckel 13 auf das Gehäuseunterteil 14 aufgesetzt werden, wobei der zuvor mit dem Deckel 13 verrastete erste Klemmring 35 mit seiner ersten Klemmfläche 36 außenseitig am äußeren Randbereich 54 der Seitenwand 52 zur Anlage gelangt und der Deckel 13 mit dem Gehäuseunterteil 14 verrastet wird. Die Fertigung des Filterelementes 50 und die Montage des Tankbelüftungsfilters 10 gestalten sich somit sehr einfach.

## Patentansprüche

1. Tankbelüftungsfilter mit einem Gehäuse (12), das eine mit dem zu belüftenden Tank verbindbare Tanköffnung (16) und eine mit der Umgebung verbundene Durchlaßöffnung (62) aufweist, wobei zwischen der Tank- und der Durchlaßöffnung (16, 62) ein Filterelement (50) angeordnet ist, **dadurch gekennzeichnet, daß** das Filterelement (50) aus einem flachen Filtermaterial gefertigt ist, einstückig ausgestaltet ist und eine Stirnwand (51) aufweist, die von einer gewellten, schräg zur Stirnwand (51) ausgerichteten Seitenwand (52) umgeben ist, und daß das Filterelement (50) im Gehäuse (12) zwischen miteinander zusammenwirkenden Klemmelementen (35, 38) eines Gehäuseoberteils (13) und eines Gehäuseunterteils (14) eingeklemmt ist, wobei die Klemmelemente (35, 38) einen Bereich (54) der Seitenwand (52) des Filterelements (50) in radialer Richtung verklemmen, und wobei die Klemmelemente (35, 38) entsprechend der wellenförmigen Ausgestaltung der Seitenwand (52) des Filterelementes geriffelt sind.

2. Tankbelüftungsfilter nach Anspruch 1, **dadurch gekennzeichnet, daß** das Gehäuseunterteil (14) mit dem zu belüftenden Tank verbindbar ist, wobei die Stirnwand (51) des Filterelements (50) am Gehäuseoberteil (13) und die Seitenwand (52) des Filterelementes (50) am Gehäuseunterteil (14) anliegt.

3. Tankbelüftungsfilter nach Anspruch 2, **dadurch gekennzeichnet, daß** die Stirnwand (51) von einer Stütze (56) des Gehäuseunterteils (14) abgestützt ist.

4. Tankbelüftungsfilter nach Anspruch 1, 2 oder 3, **dadurch gekennzeichnet, daß** die Klemmelemente (35, 38) einen äußeren Randbereich (54) der Seitenwand (52) zwischen sich aufnehmen.

5. Tankbelüftungsfilter nach einem der voranstehenden Ansprüche, **dadurch gekennzeichnet, daß** die Klemmelemente (35, 38) ringförmig ausgestaltet sind.

6. Tankbelüftungsfilter nach einem der voranstehenden Ansprüche, **dadurch gekennzeichnet, daß** ein erstes Klemmelement (35) einstückig mit dem Gehäuseunterteil (14) verbunden ist.

7. Tankbelüftungsfilter nach einem der voranstehenden Ansprüche, **dadurch gekennzeichnet, daß** ein zweites Klemmelement (38) als selbständig handhabbares Bauteil ausgestaltet und am Gehäuseoberteil (13) festgelegt ist.

8. Tankbelüftungsfilter nach Anspruch 7, **dadurch gekennzeichnet, daß** das zweite Klemmelement (38) mit dem Gehäuseoberteil (13) verrastet ist.

9. Tankbelüftungsfilter nach einem der voranstehenden Ansprüche, **dadurch gekennzeichnet, daß** das zweite Klemmelement einen Klemmring (38) ausbildet, der über Stege (43) mit dem Gehäuseoberteil (13) verbunden ist.

## Claims

1. Tank breather filter with a housing (12), which has a tank opening (16), which can be connected to the tank that is to be ventilated, and a through-opening (62), which is connected to the surrounding environment, a filter element (50) being disposed between the tank opening (16) and the through-opening (62), **characterized in that** the filter element (50) is produced from a flat filter material, is made in one piece and has an end wall (51), which is surrounded by a corrugated side wall (52) aligned at an angle with respect to the end wall (51), and **in that** the filter element (50) is clamped between interacting clamping elements (35, 38) of an upper housing part (13) and a lower housing part (14) in the housing (12), the clamping elements (35, 38) clamping a region (54) of the side wall (52) of the filter element (50) in the radial direction, and the clamping elements (35, 38) being fluted so as to correspond to the corrugated configuration of the side wall (52) of the filter element.

2. Tank breather filter according to Claim 1, **characterized in that** the lower housing part (14) can be connected to the tank that is to be ventilated, the end wall (51) of the filter element (50) lying against the upper housing part (13), and the side wall (52) of the filter element (50) lying against the lower housing part (14).

3. Tank breather filter according to Claim 2, **characterized in that** the end wall (51) is supported by a support (56) of the lower housing part (14).

4. Tank breather filter according to Claim 1, 2 or 3, **characterized in that** the clamping elements (35, 38) accommodate between them an outer border region (54) of the side wall (52).

5. Tank breather filter according to any one of the preceding Claims, **characterized in that** the clamping elements (35, 38) are of annular configuration.

6. Tank breather filter according to any one of the preceding Claims, **characterized in that** a first clamping element (35) is integrally connected to the lower housing part (14).

7. Tank breather filter according to any one of the preceding Claims, **characterized in that** a second clamping element (38) is formed as a component which can be independently handled and is fixed to the upper housing part (13).

8. Tank breather filter according to Claim 7, **characterized in that** the second clamping element (38) is latched to the upper housing part (13).

9. Tank breather filter according to any one of the preceding Claims, **characterized in that** the second clamping element forms a clamping ring (38), which is connected to the upper housing part (13) by means of bars (43).

## Revendications

1. Filtre de ventilation de réservoir, comportant un boîtier (12) qui présente une ouverture de réservoir (16) pouvant être reliée au réservoir à ventiler et une ouverture de passage (62) reliée à l'environnement, un élément filtrant (50) étant disposé entre l'ouverture de réservoir et l'ouverture de passage (16, 62), **caractérisé en ce que** l'élément filtrant (50) est fabriqué dans un matériau filtrant plat, est configuré d'un seul tenant, et présente une paroi frontale (51) qui est entourée par une paroi latérale (52) ondulée, orientée obliquement par rapport à la paroi frontale (51), et **en ce que** l'élément filtrant est serré dans le boîtier (12) entre des éléments de serrage (35, 38) d'une partie supérieure de boîtier (13) et d'une partie inférieure de boîtier (14) qui coopèrent l'une avec l'autre, les éléments de serrage (35,38) serrant dans une direction radiale une zone (54) de la paroi latérale (52) de l'élément filtrant (50), et les éléments de serrage (35, 38) étant cannelés en fonction de la configuration ondulée de la paroi latérale (52) de l'élément filtrant.

2. Filtre de ventilation de réservoir selon la revendication 1, **caractérisé en ce que** la partie inférieure de boîtier (14) peut être reliée au réservoir à ventiler, la paroi frontale (51) de l'élément filtrant (50) se trouvant sur la partie supérieure de boîtier (13) et la paroi latérale (52) de l'élément filtrant (50) sur la partie inférieure de boîtier (14).

3. Filtre de ventilation de réservoir selon la revendication 2, **caractérisé en ce que** la paroi frontale (51) est soutenue par une colonne (56) de la partie inférieure de boîtier (14).

4. Filtre de ventilation de réservoir selon la revendication 1, 2 ou 3, **caractérisé en ce que** les éléments de serrage (35, 38) logent entre eux une zone de bordure (54) extérieure de la paroi latérale (52).

5. Filtre de ventilation de réservoir selon une des revendications précédentes, **caractérisé en ce que** les éléments filtrants (35, 38) sont configurés pour être de forme annulaire.

6. Filtre de ventilation de réservoir selon une des revendications précédentes, **caractérisé en ce qu'**un premier élément de serrage (35) est relié d'un seul tenant à la partie inférieure de boîtier (14).

7. Filtre de ventilation de réservoir selon une des revendications précédentes, **caractérisé en ce qu'**un deuxième élément de serrage (38) est configuré sous la forme d'un composant pouvant être manoeuvré indépendamment, et est fixé sur la partie supérieure de boîtier (13).

8. Filtre de ventilation de réservoir selon la revendication 7, **caractérisé en ce que** le deuxième élément de serrage (38) est encliqueté avec la partie supérieure de boîtier (13).

9. Filtre de ventilation de réservoir selon une des revendications précédentes, **caractérisé en ce que** le deuxième élément de serrage forme une bague de serrage (38) qui est reliée à la partie supérieure de boîtier (13) par l'intermédiaire de ligaments (43).
